# EUROPÄISCHE PATENTANMELDUNG

(11) **EP 1 231 578 A2**
(43) Veröffentlichungstag der Anmeldung: **14.08.2002**
(21) Anmeldenummer: 02100089.8
(22) Anmeldetag: 31.01.2002
(51) Int. Cl.: G07F 19/00

(54) **Verfahren und Anordnung zur Durchführung einer bargeldlosen Zahlungsaktion**

(30) Priorität: 01.02.2001 DE 10104541
(71) Anmelder: SIEMENS AKTIENGESELLSCHAFT, 80333 München (DE)
(72) Erfinder: Offer, Gero, 71116, Gärtingen (DE)

(57) **Zusammenfassung**

Die Erfindung betrifft ein Verfahren zur Durchführung einer bargeldlosen Zahlungstransaktion mittels eines mobilen Endgerätes mit einer Bildausgabeeinrichtung, einer Händlerstation mit einer Bildeinleseeinrichtung und einer Zentralstation, die über ein Datennetz mit der Händlerstation verbunden ist, wobei an der Bildausgabeeinrichtung des mobilen Endgerätes eine zur Authentifizierung eines Benutzers geeignete grafische codierte Ausgabeinformation angezeigt wird, die von der Bildeinleseeinrichtung in die Händlerstation eingelesen wird und von der Zentralstation authentifiziert wird.

## Beschreibung

Die Erfindung betrifft ein Verfahren nach dem Oberbegriff des Patentanspruchs 1 sowie ein zu dessen Durchführung geeignetes mobiles Endgerät und eine Zentralstation.

In den letzten Jahren erlangen bargeldlose Zahlungstransaktionen eine steigende Akzeptanz. Gründe dafür sind darin zu sehen, daß Käufer somit keine großen Geldbeträge mit sich führen brauchen, um Einkäufe zu tätigen. Wesentliche Vorteile sind darin zu sehen, daß das Diebstahlrisiko herabgesetzt und die Schwelle für Spontaneinkäufe heruntergesetzt wird. Auch der Händler erlangt einen Vorteil, da er keine großen Bargeldbeträge handzuhaben braucht.

In der Vergangenheit wurden deswegen Kreditkarten eingeführt, bei denen der Karteninhaber mit einer ihm zugeordneten Kreditkarte und seiner Unterschrift oder auch nur einer der Kreditkarte zugeordneten Kreditkartennummer eine bargeldlose Zahlung ausführen kann. Allerdings ist hier das Mißbrauchsrisiko relativ hoch, da Kreditkarten im Falle eines Diebstahls und mit einer gefälschten Unterschrift unberechtigt benutzt werden können. Auch sind die in Verbindung mit der Kreditkarte anfallenden Transaktionsgebühren oft sehr hoch.

Als Alternative zur Kreditkarte sind Smartcards mit einer intgerierten Prozessor-Speichereinheit entwickelt worden. Bei Smartcards wird eine Verschlüsselungstechnologie verwendet, bei der Geldbeträge so auf der Karte gespeichert werden können, daß das Aufladen der Karte nur über autorisierte Provider erfolgen kann. Zur Zahlung eines Betrages bei einem Händler ist eine PIN vorgesehen, die bei der Zahlung direkt von der Smartcard überprüft wird. Diese Art der Zahlung erfordert jedoch zur Überschreitung der Akzeptanzschwelle der Öffentlichkeit ein dichtes Netz von den Instituten zugeordneten Ladestationen. Darüber hinaus müssen die Händler entsprechende Smartcard-Lesestationen bereitstellen.

Im zunehmenden Maße erlangen daher bargeldlose Zahlungen mittels eines mobilen Endgerätes, beispielsweise eines Mobilfunk-Endgerätes oder eines Personal-Digital-Assistant (PDA) in Verbindung mit einem Mobilfunk-Endgerät, Bedeutung. Da mobile Endgeräte, insbesondere Mobilfunktelefone eine so hohe Verbreitung erfahren haben, daß sie beinahe von jedermann mitgeführt werden, sollen sie zum persönlichen Endgerät für Zahlungsvorgänge werden und somit Kreditkarten und Smartcards auf mittelfristige Sicht ersetzen.

Bei einem Verfahren der bargeldlosen Zahlung mittels eines Mobilfunk-Endgerätes wird an einer Händlerstation ein Geldbetrag einer von einem Käufer erworbenen Ware eingelesen. Die Händlerstation kann dabei beispielsweise direkt mit dem Kassensystem des Händlers verbunden sein. Alternativ kann der Geldbetrag auch direkt über eine Eingabeeinrichtung der Händlerstation eingegeben werden. Dieser Betrag wird zusammen mit einer Kennung der Händlerstation über ein Datennetz an eine Zentralstation übertragen, wo die Daten zwischengespeichert werden. Über das Mobilfunk-Endgerät sendet der Kunde die Kennung der Händlerstation an die Zentralstation, die dann die Kennung mit der Kennung der gespeicherten Daten vergleicht und daraufhin den entsprechenden Geldbetrag an das Mobilfunk-Endgerät übermittelt.

An dem Mobilfunk-Endgerät wird eine Bestätigung der Zahlung abgefragt und an die Zentralstation übermittelt. Die Bestätiguang ist dabei zumeist dergestalt, daß der zu zahlende Betrag an einem Display des Mobilfunk-Endgerätes angezeigt wird und der Benutzer bei einem korrekt angezeigten Betrag mittels einer Eingabe (Betätigen der OK-Taste) seine Bestätigung an die Zentralstation absendet. Die Zentralstation übermittelt dann eine entsprechende Abbuchung an eine kontoführende Einrichtung, beispielsweise ein Kreditinstitut, bei dem der Kunde eine Konto hält. Somit werden für dieses Verfahren ein Mobilfunk-Endgerät, eine Händlerstation und eine Zentralstation benötigt. Die Zentralstation ist dabei über Telekommunikations- und/oder Datenverbindungen mit dem Mobilfunk-Endgerät und der Händlerstation verbunden.

Dieses Verfahren der bargeldlosen Zahlung kann mobil an verschiedensten Orten, unter anderem an Verkaufsautomaten (z.B. Getränke-, Süßwaren- oder Zigarettenautomaten) oder in Taxis, ausgeführt werden. Im Gegensatz zur Verwendung von Kreditkarten ist durch die nur temporäre Mobilfunk-Telefonverbindung und die Eingabe der Bestätigung während dieser Zeit für den Händler eine unautorisierte Verwendung von während der Verbindung ausgetauschten Daten praktisch kaum möglich. Somit ist ein Mißbrauch für eventuelle spätere Transaktionen durch Händler ausgeschlossen. Weiterhin ist durch die Einbindung der Zentralstation eine Zahlung durchführbar, bei der sicherheitsrelevante Daten des Käufers, wie beispielsweise die Kennung, nicht in Kenntnis des Händlers gelangen. Dies gewährleistet eine sichere und anonymisierte Zahlung durch den Kunden.

Aufgrund der hohen Verbreitung der Mobilfunk-Endgeräte kann dieses Verfahren zur bargeldlosen Bezahlung ohne massive weitere Investitionen einfach verwendet werden. Dieses Verfahren eignet sich auch hervorragend zur Transaktion von Kleinstbeträgen. Es ist zudem unabhängig von der Art des Mobilfunkvertrages, wodurch auch Benutzer mit einem Prepaid-Konto bargeldlos bei einem Händler bezahlen können. Es ist weiterhin als vorteilhaft zu erachten, daß dieses Verfahren neben der Bezahlung in realen Geschäften oder Kaufhäusern auch bei "virtuellen Geschäften", beispielsweise bei einem virtuellen Internet-Shop, verwendet werden kann.

Es wirkt sich jedoch als nachteilig aus, daß die Schritte zur Identifikation und Authentisierung des Benutzers durch einen Rückruf auf das Mobilfunk-Endgerät mit einer Aufforderung zur Eingabe einer vom Benutzer vorher festgelegten PIN realisiert werden. Diese Schritte sind zeitaufwendig und erfordern Geduld des Händlers, des Benutzers und der hinter dem Benutzer wartenden weiteren Kunden. Außerdem werden für dieses Verfahren zwei Telekommunikations- und/oder Datenverbindungen benötigt, wodurch es relativ kostenaufwendig ist. Es erweist sich zudem als nachteilig, daß dieses Verfahren bei einer Störung eines Mobilfunksystems (GSM, GPRS, UMTS, etc.) komplett versagt. Diese Störungen können beispielsweise durch ein temporär überlastetes Mobilfunknetz oder ein Funkloch ausgelöst werden.

Bei einem weiteren, einem vom aktuellen Bestehen einer Mobilfunkverbindung unabhängigen Verfahren dient eine auf dem Mobilfunk-Endgerät aufgebrachte Codierung, beispielsweise ein Barcode, zur Identifikation/Authentisierung des Benutzers. Allerdings erweist sich auch dieses Verfahren als nachteilig, da es bei einem Verlust des Mobilfunk-Endgerätes (auch zeitweise) schnell und effizient für Betrugszwecke verwendet werden kann.

Der Erfindung liegt daher die Aufgabe zugrunde, ein Verfahren zur einfachen, sicheren und transparenten bargeldlosen Bezahlung von Waren und/oder Dienstleistungen mittels eines mobilen Endgerätes, eine Händlerstation und eine Zentralstation zur Durchführung des Verfahrens bereitzustellen.

Diese Aufgabe wird hinsichtlich ihres Verfahrensaspektes durch ein Verfahren mit den Merkmalen des Anspruchs 1 und hinsichtlich ihrer Vorrichtungsaspekte mit den Merkmalen des Anspruchs 11 und 12 gelöst.

Erfindungsgemäß wird an der Bildausgabeeinrichtung des mobilen Endgerätes eine zur Authentifizierung des Benutzers geeignete grafisch codierte Ausgabeinformation angezeigt, die von einer Bildeinleseeinrichtung in die Händlerstation eingelesen wird und von der Zentralstation authentisiert wird. Um Waren und/oder Dienstleistungen über ein Prepaid- oder Postpaid-Konto bezahlen zu können, muß sichergestellt werden, daß eine Authentifizierungsinformation des Benutzers, beispielsweise bestehend aus einer PIN-Nummer und/oder eine auf der SIM-Karte des mobilen Endgerätes gespeicherten Identifikationsnummer und/oder Telefonnummer, sicher und transparent zu einem Rechnungssteller (Zentralstation) übertragen wird. Dort wird die Authentisierungsinformation mittels eines Vergleiches einer dort gespeicherten Benutzerinformation überprüft.

Bei einer positiv erfolgten Authentisierung wird dann der Zahlungsvorgang freigegeben und ähnlich den üblichen Abläufen für Kredit- und EC-Karten eine Zahlungsgarantie ausgesprochen. Mittels der grafisch codierten Ausgabeinformation wird die darin inhärente Authentifizierungsinformation schnell und sicher über eine Datenleitung von der Händlerstation an die Zentralstation übertragen. Die Authentifizierung erfolgt somit ohne eine Mobilfunkverbindung zwischen dem mobilen Endgerät und der Zentralstation.

Vorteilhafte Weiterbildung des erfindungsgemäßen Verfahrens sind in den Unteransprüchen angegeben.

In einer bevorzugten Ausführung wird die codierte Ausgabeinformation aus einer PIN-Nummer und/oder aus einer auf der SIM-Karte des mobilen Endgerätes gespeicherten Identifikationsnummer bzw. Telefonnummer (MSISDN) erzeugt. Somit erfolgt eine eindeutige Authentisierung des Benutzers. Insbesondere durch die Eingabe der PIN-Nummer kann ein Mißbrauch des Verfahrens nach einem Verlust des mobilen Endgerätes unterbunden werden. Diese PIN-Nummer kann dabei der Einfachheit halber gleich der SIM-PIN des Mobilfunk-Endgerätes sein, es erweist sich jedoch als noch sicherer, eine unabhängige PIN zu vereinbaren. Zur Erlangung einer größtmöglichen Sicherheit kann die codierte Ausgabeinformation aus allen drei oben genannten Nummern erzeugt werden.

In einer bevorzugten Ausführung umfaßt das Verfahren die Teilschritte:
a) Einstellen eines elektronischen Guthabens und Speichern in einem Guthabenspeicher der Zentralstation,
b) Auslösen eines Codieralgorythmus in einer Verschlüsselungseinrichtung des mobilen Endgerätes zur Erzeugung eines digitalen Codes in Ansprechen auf die PIN-Nummer und/oder die Identifikationsnummer und/oder die Telefonnumer,
c) Konvertieren des digitalen Codes mittels einer Konvertierungseinrichtung in die grafisch codierte Ausgabeinformation und Anzeigen dieser auf der Bildausgabeeinrichtung des mobilen Endgerätes,
d) Auslesen der grafisch codierten Ausgabeinformation mit der Bildeinleseeinrichtung der Händlerstation und Konvertieren dieser in den digitalen Code,
e) Übertragen des digitalen Codes zusammen mit einem zu zahlenden Betrag an die Zentralstation,
f) Auslösen eines inversen Codieralgorithumus in einer Entschlüsselungseinrichtung der Zentralstation zur Entschlüsselung des digitalen Codes in eine Benutzerinformation und Vergleichen dieser mit einer in einem Nutzerspeicher gespeicherten Authentifizierungsinformation,
g) Auslösen eines Bestätigungssignals bei einer erfolgten Authentifizierung und Ausführen einer Dezimierfunktion des elektronischen Guthabens um den empfangenen Betrag durch eine Dezimiereinrichtung und Speichern des Restguthabens in dem Guthabenspeicher.

Diese Schritte benötigen seitens des Kunden und des Händlers keine weitere Investitionen in weitere Bauteile, sondern können rein softwaremäßig implementiert werden.

Bevorzugt wird das Verfahren so durchgeführt, daß nach dem Verfahrensschritt g) der weitere Teilschritt g1) Auslösen einer Bestätigungsfunktion nach erfolgter Dezimierfunktion und Übertragen der Bestätigungsfunktion an die Händlerstation umfaßt. Somit erhalten Kunde und Händler eine Bestätigung bei einer erfolgten Zahlung.

In einer weiteren bevorzugten Ausführung wird die codierte Ausgabeinformation als Barcode auf der Bildausgabeeinrichtung des mobilen Endgerätes dargestellt. Barcodes haben sich im Handel weitestgehend als schnelles und einfaches Preiseingabesystem durchgesetzt und somit mühsam aufzubringende Preisetiketten verdrängt.

Bevorzugt wird die Bildeinleseeinrichtung als Barcode-Scanner ausgebildet. Somit sind für den Händler zur Durchführung des Verfahrens keine weiteren Investitionen in weitere Geräte zu leisten, da Barcode-Scanner in beinahe jedem Geschäft vorzufinden sind.

In einer bevorzugten Ausführung wird die codierte Ausgabeinformation in einem festgelegten Zeitabschnitt, vorzugsweise zwei bis fünf Sekunden, auf der Bildausgabeeinrichtung dargestellt. Da nur in dieser Zeit eine Abtastung des Barcodes durch den Barcode-Scanner vorgenommen werden kann, wird somit einem eventuellen Mißbrauch anhand der Displayanzeige vorgebeugt.

Vorzugsweise ist das mobile Endgerät als Mobilfunk-Endgerät oder als PDA ausgebildet. Es erweist sich bei Mobilfunk-Endgeräten als vorteilhaft, bezogen auf die Größe und die Wiedergabequalität des Displays eines Mobilfunk-Endgerätes, nur den traditionellen Barcode darzustellen. Barcodes erlauben das Codieren beliebiger Strings von ASCII-Zeichen oder Binärdaten. Diese Barcodes sind eindimensional, da die Informationen nur in Leserichtung codiert ist.

Da die Displays von PDAs eine größere Fläche aufweisen und zudem oftmals kontrastreicher sind, bietet es sich bei PDAs an, zweidimensionale (2D-)Barcodes darzustellen. Zweidimensionale Barcodes können Informationen in zwei Richtungen codieren. Die am weitesten verbreiteten 2D-Barcodes sind die Codes PDF 417 (Portable Data File) und Data Matrix. Zweidimensionale Barcodes erreichen erheblich höhere Informationsdichten als traditionelle Barcodes. Mit dem Code PDF 417 kann - abhängig von der Ausgabequalität und dem Grad der Fehlerkorrektur - eine Zeichendichte von bis zu 100 bits pro cm² (binär) erreicht werden. Mit Data Matrix können theoretisch noch höhere Zeichendichten erreicht werden. Durch Fehlerkorrektur-Verfahren kann erreicht, daß der Code noch gelesen werden kann, wenn bis zu 40 % der Fläche verschmutzt oder abgedeckt sind.

Vorzugsweise wird die codierte Bildinformation mittels eines asymmetrischen Verschlüsselungsprotokolls, insbesondere eines RSA-Protokolls (Riverest, Shamir, Adleman Protokoll) oder eines ECC-Protokolls (Elliptic Curve Cryptography) erzeugt. Bei diesen Protokollen werden zum Verschlüsseln und Entschlüsseln jeweils zwei Schlüssel verwendet, wobei der Schlüssel zum Verschlüsseln allgemein bekannt sein darf - er zum Entschlüsseln jedoch nutzlos ist. Diese Verfahren haben den Vorteil, daß der Schlüssel zum Decodieren nicht mehr ausgetauscht zu werden braucht, was sich bei früheren Cryptoverfahren, beispielsweise DES (Data Encryption Standard) als Schwachstelle erwiesen hat.

Nachfolgend werden bevorzugte Ausführungsformen der Erfindung anhand von Zeichnungen beschriebenen, in denen
Figur 1 eine schematische Darstellung eines Systemes zur bargeldlosen Bezahlung mittels eines Mobilfunk-Endgerätes nach dem Stand der Technik,
Figur 2 eine schematische Darstellung eines Mobilfunk-Endgerätes,
Figur 3 eine schematische Darstellung einer Zentralstation,
Figur 4 eine schematische Darstellung des Mobilfunk-Endgerätes mit einem dargestellten Barcode, und
Figur 5 einen PDA mit einem dargestellten zweidimensionalen Barcode
zeigen.

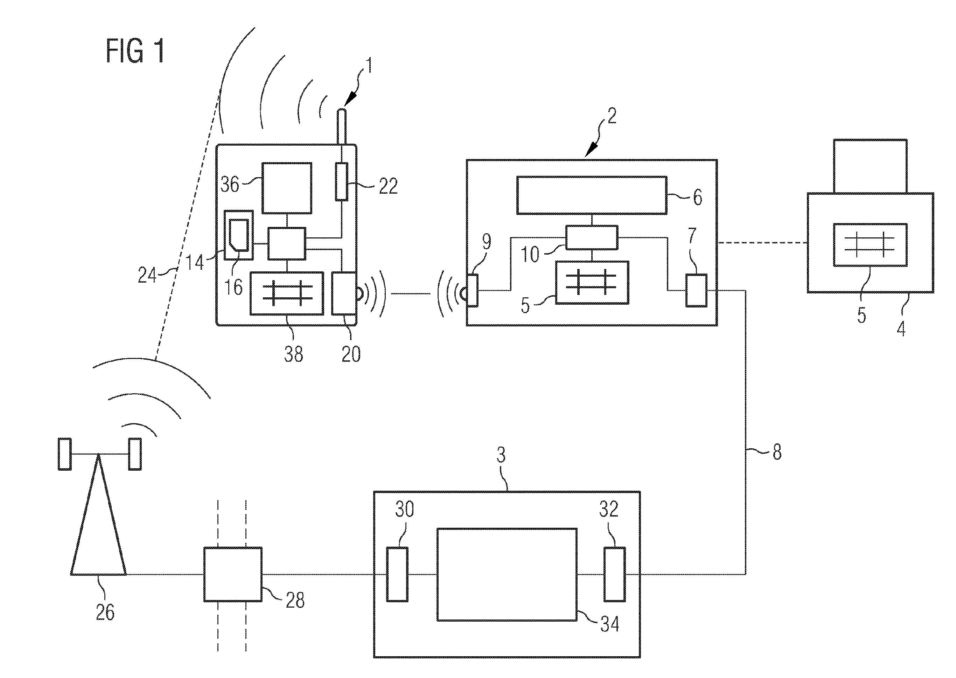

Figur 1 zeigt in einer schematischen Darstellung ein System zur bargeldlosen Bezahlung mittels eines Mobilfunk-Endgerätes 1. Die Figur zeigt das Mobilfunk-Endgerät 1, eine Händlerstation 2 und eine Zentralstation 3, die temporär miteinander verbunden sind. Die Zentralstation 3 ist über eine Mobilfunkverbindung mit dem Mobilfunk-Endgerät 1 und über eine Datenverbindung mit der Händlerstation 2 verbunden. Die drei Einrichtungen Mobilfunk-Endgerät 1, Händlerstation 2 und Zentralstation 3 haben jeweils identifizierende Kennungen, die beispielsweise die Telefonnummern des Mobilfunk-Endgerätes 1, der Händlerstation 2 und der Zentralstation 3 sind. Statt der Telefonnummern können aber auch andere Kennungen, beispielsweise IP-Adressen, verwendet werden.

Will ein Käufer eine Ware und/oder Dienstleistung mit einem elektronischen Guthaben bezahlen, so wird zunächst der Betrag der Ware und/oder Dienstleistung in die Händlerstation 2 eingelesen. Dies geschieht beispielsweise, indem der Betrag zunächst in ein elektronisches Kassensystem 4 eingegeben wird, das mit der Händlerstation 2 verbunden ist. Dann wird der Betrag an die Händlerstation 2 übertragen. Vorzugsweise kann der Betrag auch direkt mittels einer Händlerstation-Eingabeeinrichtung 5, beispielsweise einer Tastatur oder eines Abtastscanners, in die Händlerstation 2 eingelesen werden. Der Betrag wird an einer ersten Ausgabeeinrichtung 6 angezeigt.

Der Betrag wird dann mittels einer ersten Sende-und Empfangseinrichtung 7 an die Zentralstation 3 überwiesen. Zusätzlich zum Betrag wird eine Kennung des Mobilfunk-Endgerätes 1 an die Zentralstation 3 übertragen, wie weiter unten beschrieben. Vorzugsweise werden diese Informationen über eine Datenverbindung 8 übermittelt. Bei der Datenverbindung 8 kann es sich auch um jede geeignete Art einer Telekommunikationsverbindung handeln.

Die Händlerstation 2 weist ferner eine zweite Sende-und Empfangseinrichtung 9 zum Empfangen der Kennung des Mobilfunk-Endgerätes 1 auf. Dabei kann es sich um eine Infrarotschnittstelle oder um ein Bluetooth-Modul handeln. Die erste und zweite Sende-und Empfangseinrichtung 7, 9 und die Eingabe- und Ausgabeeinrichtung 5, 6 sind mit einer ersten Prozessoreinrichtung 10 verbunden.

Das Mobilfunk-Endgerät 1 weist eine an sich bekannte SIM-Karte 16, die über die Eingabe einer PIN aktiviert werden muß, auf. Die SIM-Karte befindet sich in einem SIM-Karte Schreib/Lesegerät 14. Über diese SIM-Karte 16 wird die Kennung des Mobilfunk-Endgerätes 1 generiert. Außerdem weist das Mobilfunk-Endgerät 1 zum Austausch von Daten eine dritte Sende-und Empfangseinrichtung 20 auf, die beispielsweise wieder durch die bereits erwähnte Infrarot-Schnittstelle oder das Bluetooth-Modul gebildet ist.

Bei den ausgetauschten Daten handelt es sich dabei um die Kennung des Mobilfunk-Endgerätes 1. Daneben kann auch die Kennung der Händlerstation 2 an das Mobilfunk-End-gerät 1 übertragen werden und/oder eine Information über den zu zahlenden Geldbetrag. Zusätzlich überträgt das Mobilfunk-Endge-rät 1 seine Kennung mittels einer vierten Sende-und Empfangseinrichtung 22 über eine Luftschnittstelle 24 an eine GSM-Basisstation 26. Die Kennung wird dann - z. B. auf eine Anfrage der Zentralstation hin - über eine Vermittlungsstation 28 an die Zentralstation 3 übermittelt.

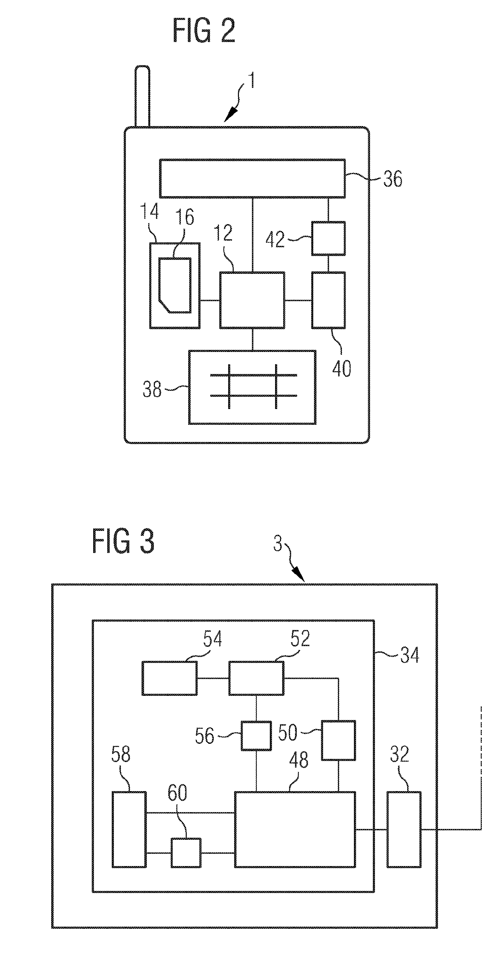

Die Zentralstation 3 weist eine fünfte Sende- und Empfangseinrichtung 30 zur Herstellung einer Verbindung zu der Vermittlungsstation 28 und eine sechste Sende- und Empfangseinrichtung 32 zur Herstellung eine Verbindung zu der Händlerstation 2 auf. Ferner weist die Zentralstation 3 eine mit den Sende- und Empfangseinrichtungen 30, 32 verbundene Buchungseinrichtung 34 auf, die in Fig. 3 näher erläutert wird.

Die Buchungseinrichtung 34 überträgt den von der Händlerstation 2 empfangenen Betrag über die Luftschnittstelle 24 zurück an das Mobilfunk-Endgerät 1. An einer zweiten Ausgabeeinrichtung 36 des Mobilfunk-Endgerätes 1 wird dieser Betrag angezeigt. Der Benutzer ist dann aufgefordert, bei Anzeige eines korrekten Betrages, eine Bestätigungsinformation an die Zentralstation 3 zu übertragen. Dies kann beispielsweise durch Betätigung einer bestimmten Taste einer zweiten Eingabeeinrichtung 38 des Mobilfunk-Endgerätes 1 geschehen. Bei Eingang der Bestätigungsinformation an die Zentralstation 3 erfolgt dann eine Abbuchung des Betrages von einem Konto des Benutzers.

Figur 2 zeigt in einer schematischen Darstellung den Aufbau des Mobilfunk-Endgerätes 1 genauer. Das Endgerät enthält das in der Figur 1 gezeigte Endgerät nach dem Stand der Technik, die zweite Prozessoreinrichtung 12, an der die zweite Eingabe einrichtung 38 angeschlossen ist sowie das SIM-Schreib-/Lesegerät 14 mit der darin enthaltenen SIM-Karte 16. An der zweiten Prozessoreinrichtung 12 ist zusätzlich eine Verschlüsselungseinrichtung 40 angeschlossen, die zur Codierung eines digitalen Codes in Ansprechen auf eine PIN-Nummer und/oder auf die auf der SIM-Karte gespeicherte Identifikationsnummer und/oder Telefonnummer dient.

Die Verschlüsselungseinrichtung 40 verschlüsselt vorzugsweise alle drei oben genannten Nummern mittels eines asymmetrischen Verschlüsselungsprotokolls, insbesondere eines RSA-Protokolls oder ECC-Protokolls. Die verschlüsselte Ausgangsinformation wird an eine Konvertierungseinrichtung 42 übertragen, die diesen digitalen Code in eine digitale Ausgabeinformation konvertiert. Diese grafisch darstellbare digitale Ausgabeinformation wird an der zweiten Ausgabeeinrichtung 36 dargestellt. Die digitale Ausgabeinformation kann in Form eines Barcodes dargestellt werden.

Figur 3 zeigt in einer schematischen Darstellung den Aufbau der Zentralstation 3 genauer. Die Zentralstation weist in der Buchungseinrichtung 34 eine dritte Prozessoreinrichtung 48 auf, die mit einer Entschlüsselungseinrichtung 50 verbunden ist, die den von der sechsten Sende- und Empfangseinrichtung 32 empfangenen und an die dritte Prozessoreinrichtung 48 gesendeten digitalen Code mittels eines Entschlüsselungsprotokolls entschlüsselt.

Das Entschlüsselungsprotokoll ist dabei kompatibel zu dem in der Verschlüsselungseinrichtung 40 des Mobilfunk-Endgerätes 1 verwendeten Verschlüsselungsprotokoll. Am Ausgang der Entschlüsselungseinrichtung 50 liegt eine Benutzerinformation vor, mittels der Rückschlüsse auf die PIN-Nummer und/oder der Identifikationsnummer und/oder der Telefonnummer des Benutzers zu schließen sind. Die Benutzerinformation wird einer Vergleichereinrichtung 52 zugeführt. Diese Einrichtung hat zugleich Zugriff auf einen Nutzerspeicher 54, in dem Authentifizierungsinformationen des Benutzers gespeichert sind. Die Authentifizierungsinformation läßt Rückschlüße auf die oben genannten drei Nummern zu, die allerdings zuvor vereinbart wurden. Die Vergleichereinrichtung 52 vergleicht dann die in dem Nutzerspeicher 54 gespeicherte Authentifizierungsinformation mit der von der Entschlüsselungseinrichtung 50 decodierten Benutzerinformation und sendet bei Übereinstimmung ein entsprechendes Signal an eine Bestätigungseinrichtung 56.

Diese Einrichtung sendet ein vozugsweise codiertes Bestätigungssignal an die dritte Prozessoreinrichtung 48. Nach einem Empfang des Bestätigungssignals liest die dritte Prozessoreinrichtung 48 aus einem Guthabenspeicher 58, das dem Benutzer zugeordnet ist, das jeweilige Guthaben des Benutzers aus und prüft, ob das Benutzerguthaben zur Deckung des ebenfalls von der Händlerstation 2 übertragenen Betrages ausreicht. Bei einer ausreichenden Deckung des Guthabenkontos wird das Guthaben mittels einer ebenfalls mit der dritten Prozessoreinrichtung 48 verbundenen Dezimiereinrichtung 60 um den Betrag dezimiert und im Anschluß wird das Restguthaben in dem mit der Dezimiereinrichtung 60 verbundenen Guthabenspeicher 58 gespeichert.

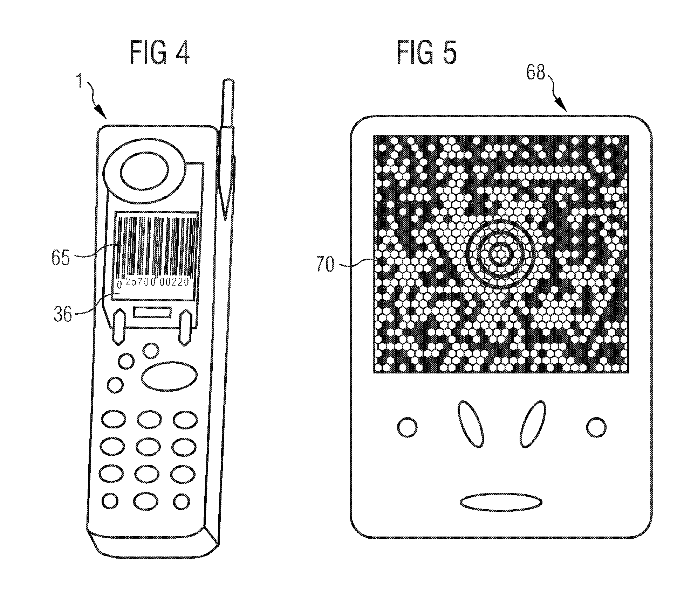

Figur 4 zeigt eine Außenansicht des Mobilfunk-Endgerätes 1 mit einem auf der zweiten Ausgabeeinrichtung 36 dargestellten Barcode 65. Der Barcode wird seit Jahrzehnten zur Kennzeichnung von Einzelhandels-Artikeln, Transport-Stücken, Medikamenten, Bibliotheksbüchern, etc. eingesetzt.

Figur 5 zeigt eine Außenansicht eines PDA 68 mit einem auf der Ausgabeeinrichtung (LCD-Display oder TFT-Display) dargestellten zweidimensionalen Barcode 70. Dieser in den letzten Jahren entwickelte Code kann Informationen in zwei Richtungen codieren und erreicht erheblich höhere Informationsdichten als der traditionelle Barcode.

## Patentansprüche

1. Verfahren zur Durchführung einer bargeldlosen Zahlungstransaktion mittels eines mobilen Endgerätes mit einer Bildausgabeeinrichtung und einer identifizierenden Kennung, einer Händlerstation (2) mit einer Bildeinleseeinrichtung und einer Zentralstation (3), die über ein Datennetz mit der Händlerstation (2) verbunden ist,
**dadurch gekennzeichnet, daß**
an der Bildausgabeeinrichtung des mobilen Endgerätes eine zur Authentifizierung eines Benutzers geeignete grafische codierte Ausgabeinformation angezeigt wird,
die grafisch codierte Ausgabeinformation von der Bildeinleseeinrichtung in die Händlerstation (2) eingelesen und in einen digitalen Code transformiert und,
der digitale Code von der Zentralstation (3) authentifiziert wird.

2. Verfahren nach Anspruch 1,
**dadurch gekennzeichnet, daß**
die grafisch codierte Ausgabeinformation aus einer PIN-Nummer und/oder aus einer auf einer SIM-Karte (14) des mobilen Endgerätes gespeicherten Identifikationsnummer und/oder einer Telefonnummer erzeugt wird.

3. Verfahren nach Anspruch 1 oder 2,
**gekennzeichnet durch**
die folgenden Verfahrensschritte
a) Einstellen eines elektronischen Guthabens und Speichern in einem Guthabenspeicher (58) der Zentralstation (3),
b) Auslösen eines Codieralgorithmus in einer Verschlüsselungseinrichtung (40) des mobilen Endgerätes zur Erzeugung eines digitalen Codes in Ansprechen auf die PIN-Nummer und/oder die Identifikationsnummer und/oder die Telefonnummer,
c) Konvertieren des digitalen Codes mittels einer Konvertierungseinrichtung (42) in die grafisch codierte Ausgabeinformation und Anzeigen dieser auf der Bildausgabeeinrichtung,
d) Auslesen der grafisch codierten Ausgabeinformation mit der Bildeinleseeinrichtung der Händlerstation (2) und Konvertieren dieser in den digitalen Code,
e) Übertragen des digitalen Codes zusammen mit einem zu zahlenden Betrag an die Zentralstation (3),
f) Auslösen eines inversen Codieralgorithmus in einer Entschlüsselungseinrichtung (50) der Zentralstation (3) zur Entschlüsselung des digitalen Codes in eine Benutzerinformation und Vergleichen dieser mit einer in einem Nutzerspeicher (54) gespeicherten Authentifizierungsinformation,
g) Auslösen eines Bestätigungssignals bei einer erfolgten Authentifizierung und Ausführen einer Dezimierfunktion des elektronischen Guthabens um den empfangenen Betrag **durch** eine Dezimiereinrichtung (60) und Speichern des Restguthabens in dem Guthabenspeicher (58).

4. Verfahren nach Anspruch 3,
**dadurch gekennzeichnet, daß**
der Schritt g) den Teilschritt: Auslösen einer Bestätigungsfunktion nach der erfolgten Dezimierfunktion und Übertragen der Bestätigungsfunktion an die Händlerstation (2) umfaßt.

5. Verfahren nach einem der vorangehenden Ansprüche,
**dadurch gekennzeichnet, daß**
die codierte Ausgabeinformation als Barcode oder als zweidimensionaler Barcode auf der Bildausgabeeinrichtung des mobilen Endgerätes dargestellt wird.

6. Verfahren nach einem der vorangehenden Ansprüche,
**dadurch gekennzeichnet, daß**
die Bildeinleseeinrichtung als Barcode-Scanner ausgebildet ist.

7. Verfahren nach einem der vorangehenden Ansprüche,
**dadurch gekennzeichnet, daß**
die grafisch codierte Ausgabeinformation in einem festgelegten Zeitabschnitt, vorzugsweise zwei bis fünf Sekunden, auf der Bildausgabeeinrichtung dargestellt wird.

8. Verfahren nach einem der vorangehenden Ansprüche,
**dadurch gekennzeichnet, daß**
das mobile Endgerät als Mobilfunk-Endgerät (1) ausgebildet ist.

9. Verfahren nach einem der Ansprüche 1 bis 7,
**dadurch gekennzeichnet, daß**
das mobile Endgerät als PDA (68) ausgebildet ist.

10. Verfahren nach einem der vorangehenden Ansprüche,
**dadurch gekennzeichnet, daß**
die codierte Bildinformation mittels eines asymmetrischen Verschlüsselungsprotokolls, insbesondere eines RSA-Protokolls oder eines ECC-Protokolls erzeugt wird.

11. Mobiles Endgerät zur Durchführung des Verfahrens nach einem der vorangehenden Ansprüche,
**gekennzeichnet durch**
- eine Verschlüsselungseinrichtung (40) zur Verschlüsselung einer Benutzerinformation, bestehend aus einer PIN-Nummer und/oder einer auf einer SIM-Karte (16) gespeicherten Identifikationsnummer und/oder einer Telefonnummer in einen digitalen Code,
- eine Konvertierungseinrichtung (42) zur Konvertierung des digitalen Codes in eine grafisch codierte Ausgabeinformation.

12. Zentralstation (3) zur Durchführung des Verfahrens nach einem der vorangehenden Ansprüche,
**gekennzeichnet durch**
- einen Guthabenspeicher (58) zum Speichern eines einem Benutzer zugeordneten elektronischen Guthabens,
- einen Nutzerspeicher (54) zum Speichern mindestens einer dem Nutzer zugeordneten Authentifizierungsinformation, bestehend aus der PIN-Nummer und/oder der auf der SIM-Karte (16) gespeicherten Identifikationsnummer und/oder der Telefonnummer,
- eine Entschlüsselungseinrichtung (50) zur Entschlüsselung des von der Händlerstation (2) empfangenen digitalen Codes in eine Benutzerinformation,
- eine Vergleichereinrichtung (52) zum Vergleichen der in dem Nutzerspeicher (54) gespeicherten Authentifizierungsinformation mit der von der Entschlüsselungseinrichtung (50) entschlüsselten Benutzerinformation und Auslösen eines Bestätigungssignals **durch** eine Bestätigungseinrichtung (56) bei übereinstimmenden Informationen,
- eine Dezimiereinrichtung (60) zum Dezimieren des elektronischen Guthabens um den von der Händlerstation (2) empfangenen Betrag in Ansprechen auf das Bestätigungssignal.
